(19) Europäisches Patentamt

European Patent Office

Office européen des brevets

(11) Veröffentlichungsnummer: **0 233 338 B1**

(12) **EUROPÄISCHE PATENTSCHRIFT**

(45) Veröffentlichungstag der Patentschrift: **29.01.92**

(51) Int. Cl.⁵: **G01B 21/02**

(21) Anmeldenummer: **86116882.1**

(22) Anmeldetag: **04.12.86**

(54) **Längenmesseinrichtung.**

(30) Priorität: **23.01.86 DE 3601945**

(43) Veröffentlichungstag der Anmeldung:
**26.08.87 Patentblatt 87/35**

(45) Bekanntmachung des Hinweises auf die
Patenterteilung:
**29.01.92 Patentblatt 92/05**

(84) Benannte Vertragsstaaten:
**DE FR GB IT**

(56) Entgegenhaltungen:
**DE-A- 3 415 164**
**DE-C- 2 844 066**
**DE-C- 3 409 298**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Ernst, Alfons, Dipl.-Ing.**
**Traunring 62**
**W-8225 Traunreut(DE)**
Erfinder: **Affa, Alfred**
**Hochfellnstrasse 6**
**W-8221 Stein(DE)**

**Beschreibung**

Die Erfindung betrifft eine Längenmeßeinrichtung wie diese insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen eines Prüfobjekts eingesetzt wird.

Aus der DE-A-28 44 066 ist eine Längenmeßeinrichtung zur Messung der Relativlage zweier Objekte bekannt, bei der ein Ablesegerät zur Abtastung der Teilung eines Teilungsträgers am ersten Objekt befestigt ist. Der Teilungsträger ist mittels einer Klebeschicht mit einem Trägerkörper verbunden, der seinerseits mit einer Befestigungsfläche mittels mehrerer Schrauben an einer Montagefläche des zweiten Objekts befestigt ist. Diese Schrauben sind in einer Linie in Meßrichtung angeordnet, so daß es infolge von unvermeidlichen Unebenheiten der Befestigungsfläche und der Montagefläche beim Anziehen der Schrauben zu Verformungen des Trägerkörpers in Meßrichtung kommen kann. Diese Verformungen des Trägerkörpers können auf den Teilungsträger übertragen werden, so daß die auf einer Oberfläche des Teilungsträgers befindliche Teilungsfläche, die parallel zur Montagefläche verläuft, ebenfalls diese Verformungen aufweisen kann. Diese Verformungen der Teilungsfläche haben partielle Dehnungen und Stauchungen der Teilung auf der Teilungsfläche zur Folge, die bei einer derartigen Präzisionsmeßeinrichtung zu nicht vertretbaren Meßungenauigkeiten führen können.

Die DE-A-34 09 298 beschreibt eine gleichartig aufgebaute Längenmeßeinrichtung, bei der aber im Gegensatz zur vorgenannten DE-PS 28 44 066 die beiden Teilungsflächen des Teilungsträgers senkrecht zur Befestigungsfläche des Trägerkörpers angeordnet sind, um ihre gleichzeitige Abtastung mittels zweier Abtasteinheiten zu ermöglichen.

Eine Möglichkeit, Meßungenauigkeiten bei Verformungen des Teilungsträgers für eine Teilung zu vermeiden, besteht darin, einen Teilungsträger mit einem U-förmigen Querschnitt zu verwenden, bei dem die Teilung in der neutralen Faser des Teilungsträgers verläuft. Solche U-förmigen Teilungsträger sind jedoch teuer in der Herstellung.

Der Erfindung liegt die Aufgabe zugrunde, bei einer Längenmeßeinrichtung der genannten Gattung Meßungenauigkeiten durch Verformungen des Teilungsträgers auszuschließen.

Diese Aufgabe wird erfindungsgemäß durch die Längenmeßeinrichtung mit den Merkmalen des Anspruches 1 gelöst.

Die mit der Erfindung erzielten Vorteile bestehen insbesondere darin, daß durch die vorgeschlagene senkrechte Anordnung der Teilungsfläche des Teilungsträgers zur Montagefläche des Objekts und durch die vorgeschlagene Befestigung des Trägerkörpers für den Teilungsträger an drei ein Dreieck bildenden Befestigungspunkten an der Montagefläche des Objekts sowie durch die Lage der Teilungsachse der Teilung in Höhe der neutralen Faser des Teilungsträgers auf einfache Weise ohne zusätzliche Elemente durch Verformungen des Teilungsträgers bei seiner Befestigung am zweiten Objekt hervorgerufene Meßungenauigkeiten beseitigt werden.

Vorteilhafte Ausbildungen der Erfindung entnimmt man den Unteransprüchen.

Ausführungsbeispiele der Erfindung werden anhand der Zeichnung näher erläutert.

Es zeigen

Fig. 1      einen Querschnitt einer schematischen Längenmeßeinrichtung mit einer ersten Befestigungsart eines Trägerkörpers für einen Teilungsträger an einem Objekt;

Fig. 2      eine Draufsicht auf den Trägerkörper mit dem Teilungsträger und auf das Objekt nach Figur 1;

Fig. 3      eine Draufsicht auf die Teilungsfläche des Teilungsträgers nach Figur 1;

Fig. 4      einen Querschnitt einer zweiten Befestigungsart des Trägerkörpers für den Teilungsträger am Objekt;

Fig. 5      eine Draufsicht auf den Trägerkörper mit dem Teilungsträger und auf das Objekt nach Figur 4;

Fig. 6      einen Querschnitt einer dritten Befestigungsart des Trägerkörpers für den Teilungsträger am Objekt und

Fig. 7      eine Draufsicht auf den Trägerkörper mit dem Teilungsträger und auf das Objekt nach Figur 6.

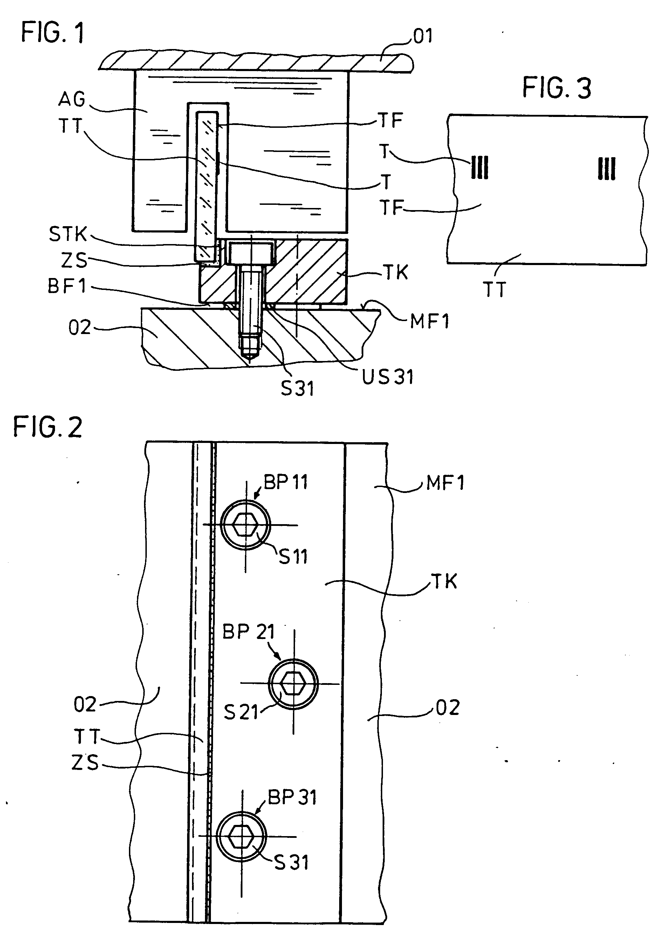

Figur 1 zeigt einen Querschnitt einer schematischen Längenmeßeinrichtung, bei der ein Ablesegerät AG zur Abtastung einer Teilung T auf einer Teilungsfläche TF eines Teilungsträgers TT an einem ersten Objekt 01 auf beliebige Weise befestigt ist. Der Teilungsträger TT ist mit seiner Teilungsfläche TF mittels einer Zwischenschicht ZS, bevorzugt in Form einer elastischen Klebeschicht, mit einer Seitenfläche STK eines Trägerkörpers TK für den Teilungsträger TT verbunden. Der Trägerkörper TK weist eine etwa senkrecht zu dieser Seitenfläche STK und senkrecht zur Teilungsfläche TF des Teilungsträgers TT verlaufende erste Befestigungsfläche BF1 auf. Der Trägerkörper TK ist mit dieser ersten Befestigungsfläche BF1 an drei ersten, ein Dreieck bildenden Befestigungspunkten BP11, BP21, BP31 an einer ersten Montagefläche MF1 eines zweiten Objekts 02 befestigt (Figur 2). Das erste Objekt 01 und das zweite Objekt 02 können durch das Bett und den Schlitten einer nicht dargestellten Bearbeitungsmaschine gebildet sein, deren gegenseitige Relativlage gemessen werden soll.

Figur 3 zeigt eine Draufsicht auf die Teilung T der Teilungsfläche TF des Teilungsträgers TT.

Diese erste Befestigungsart des Trägerkörpers TK mit seiner ersten Befestigungsfläche BF1 an der ersten Montagefläche MF1 des zweiten Objekts 02 an den drei ersten, ein Dreieck bildenden Befestigungspunkten BP11, BP21, BP31 mittels dreier erster Schrauben S11, S21, S31 und mittels dreier Unterlegscheiben US11, US21, US31 gewährleistet, daß der Trägerkörper TK in einer statisch bestimmten Dreipunktauflage auf der ersten Montagefläche MF1 des zweiten Objekts 02 keine Verformungen durch Biegemomente erfährt; somit können auch keine Verformungen vom Trägerkörper TK auf den Teilungsträger TT übertragen werden, so daß durch partielle Dehnungen und Stauchungen der Teilung T auf der Teilungsfläche TF des Teilungsträgers TT hervorgerufene Meßungenauigkeiten vermieden werden.

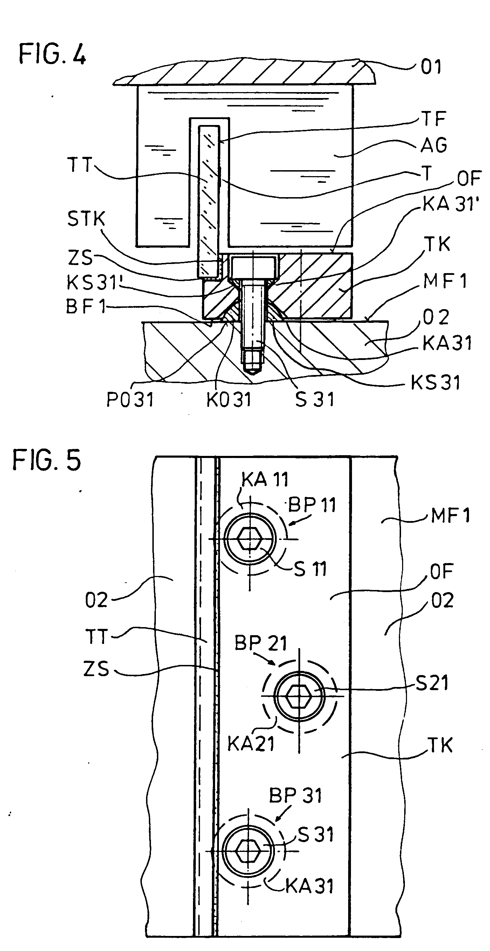

Figur 4 zeigt in einem Querschnitt eine zweite Befestigungsart des Trägerkörpers TK für den Teilungsträger TT mit seiner ersten Befestigungsfläche BF1 an der ersten Montagefläche MF1 des zweiten Objekts 02 an den drei ersten, ein Dreieck bildenden Befestigungspunkten BP11, BP21, BP31 (Fig. 5) mittels der drei ersten Schrauben S11, S21, S31 und mittels dreier erster Kugelscheiben KS11, KS21, KS31. Die konvexen Oberflächen KO11, KO21, KO31 der drei ersten Kugelscheiben KS11, KS21, KS31 greifen in drei erste kegelförmige Ausnehmungen KA11, KA21, KA31 des Trägerkörpers TK drehbeweglich ein, während die planen Oberflächen PO11, PO21, PO31 der drei ersten Kugelscheiben KS11, KS21, KS31 an der ersten Montagefläche MF1 des zweiten Objekts 02 anliegen. Die drei ersten Schrauben S11, S21, S31 greifen durch zentrale Bohrungen der drei ersten Kugelscheiben KS11, KS21, KS31 hindurch. Diese bevorzugte zweite Befestigungsart gewährleistet ebenfalls in erhöhtem Maße eine biegemomentenfreie Verbindung des Trägerkörpers TK mit der ersten Montagefläche MF1 des zweiten Objekts 02. Die drei ersten Kugelscheiben KS11, KS21, KS31 sind in den drei ersten kegelförmigen Ausnehmungen KA11, KA21, KA31 des Trägerkörpers TK unverlierbar gehalten, so daß sie weder verloren gehen noch vertauscht werden können.

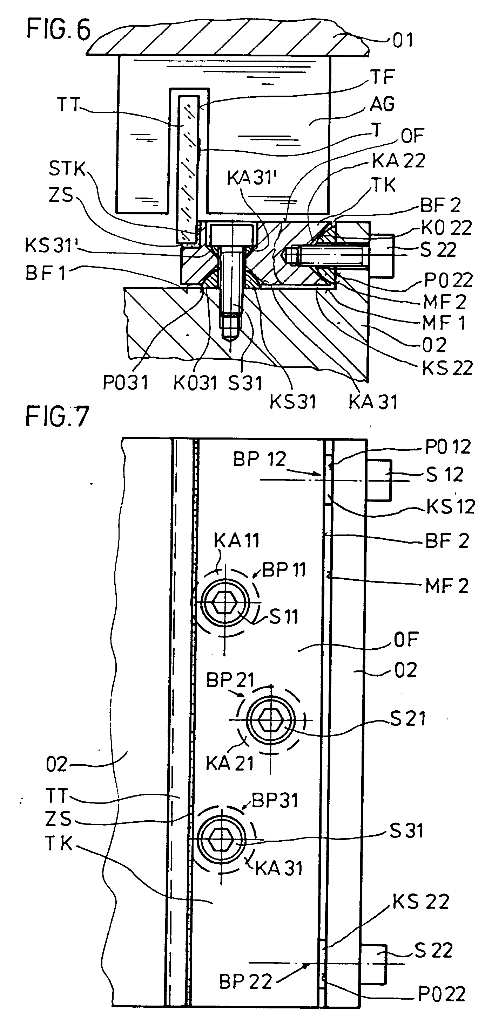

In den Figuren 6 und 7 ist in einem Querschnitt und in einer Draufsicht eine dritte Befestigungsart des Trägerkörpers TK dargestellt. Zusätzlich zu den drei ersten Befestigungspunkten BP11, BP21, BP31 an der ersten Montagefläche MF1 des zweiten Objekts 02 mit den drei ersten Schrauben S11, S21, S31 und den drei ersten Kugescheiben KS11, KS21, KS31 gemäß den Figuren 4 und 5 ist der Trägerkörper TK mit einer zweiten Befestigungsfläche BF2, die vorzugsweise senkrecht zur ersten Befestigungsfläche BF1 verläuft, an zwei zweiten Befestigungspunkten BP12, BP22 an einer zur ersten Montagefläche MF1 dementsprechend ebenfalls senkrechten zweiten Montagefläche MF2 des zweiten Objekts 02 mittels zweier zweiter Schrauben S12, S22 und mittels zweier zweiter Kugelscheiben KS12, KS22 befestigt. Die konvexen Oberflächen KO12, KO22 der beiden zweiten Kugelscheiben KS12, KS22 greifen in zwei zweite kegelförmige Ausnehmungen KA12, KA22 des Trägerkörpers TK drehbeweglich ein, während die planen Oberflächen PO12, PO22 der zwei zweiten Kugelscheiben KS12, KS22 an der zweiten Montagefläche MF2 des zweiten Objekts 02 anliegen. Die zwei zweiten Schrauben S12, S22 greifen durch zentrale Bohrungen der beiden zweiten Kugelscheiben KS12, KS22 hindurch. Diese dritte Befestigungsart ist insbesondere bei größeren Längen des Teilungsträgers TT angezeigt und bewirkt eine erhöhte Steifigkeit und eine einfachere Ausrichtung des Teilungsträgers TT parallel zur Meßrichtung. Die beiden Befestigungsflächen BF1, BF2 des Trägerkörpers TK und die beiden Montageflächen MF1, MF2 des zweiten Objekts 02 können auch vom rechten Winkel abweichende Lagen zueinander einnehmen. Die zwei zweiten Kugelscheiben KS12, KS22 sind in den zwei zweiten kegelförmigen Ausnehmungen KA12, KA22 in der zweiten Befestigungsfläche BF2 des Trägerkörpers TK ebenfalls unverlierbar gehalten.

Gemäß den Figuren 4 und 6 können den drei ersten Schrauben S11, S21, S31 drei weitere erste Kugelscheiben KS11$'$, KS21$'$, KS31$'$ zugeordnet werden, die mit ihren konvexen Oberflächen in drei weitere erste kegelförmige Ausnehmungen KA11$'$, KA21$'$, KA31$'$ in der der ersten Befestigungsfläche BF1 gegenüberliegenden Oberfläche OF des Trägerkörpers TK eingreifen und mit ihren planen Oberflächen an den Köpfen der drei ersten Schrauben S11, S21, S31 anliegen.

Der Teilungsträger TT und der Trägerkörper TK besitzen bevorzugt rechteckige Querschnitte. Gemäß den Figuren 1, 4 und 6 sind diese so angeordnet, daß die Achse des kleinsten Flächenträgheitsmoments des Teilungsträgers TT senkrecht zur Achse des kleinsten Flächenträgheitsmoments des Trägerkörpers TK verläuft. Der Teilungsträger TT und/oder der Trägerkörper TK können beispielsweise aber auch trapezförmige Querschnitte aufweisen.

Die Teilungsachse der Teilung T (Symmetrieachse der Teilung T in Meßrichtung) verläuft in Höhe der neutralen Faser des Teilungsträgers TT.

**Patentansprüche**

1. Längenmeßeinrichtung zur Messung der Relativlage zweier Objekte (01, 02), bei der ein Ablesegerät (AG) zur Abtastung der Teilung (T) eines Teilungsträgers (TT) an einem ersten Objekt (01) befestigt, der Teilungsträger (TT) mit einem Trägerkörper (TK) verbunden und der Trägerkörper (TK) an einem zweiten Objekt (02) befestigt sind, wobei die Längenmeßeinrichtung die Vereinigung folgender Merkmale aufweist:

a) Die die Teilung (T) aufweisende Teilungsfläche (TF) des Teilungsträgers (TT) ist senkrecht zu einer Befestigungsfläche (BF1) des Trägerkörpers (TK) angeordnet,
b) der Trägerkörper (TK) mit der Befestigungsfläche (BF1) ist an drei, ein Dreieck bildenden Befestigungspunkten (BP11, BP21, BP31) an einer Montagefläche (MF1) des zweiten Objekts (02) befestigt;
c) die in Meßrichtung verlaufende Symmetrieachse der Teilung (T) verläuft in Höhe der neutralen Faser des Teilungsträgers (TT);
d) die Querschnitte des Teilungsträgers (TT) und des Trägerkörpers (TK) sind so angeordnet, daß die Achse des kleinsten Flächenträgheitsmoments des Teilungsträgers (TT) senkrecht zur Achse des kleinsten Flächenträgheitsmomentes des Trägerkörpers (TK) verläuft.

2. Längenmeßeinrichtung nach Anspruch 1, bei der der Trägerkörper (TK) zusätzlich zu den drei Befestigungspunkten (BP11, BP21, BP31) an der Montagefläche (MF1) mit einer weiteren Befestigungsfläche (BF2) an zwei weiteren Befestigungspunkten (BP12, BP22) an einer weiteren Montagefläche (MF2) des zweiten Objekts (02) befestigt ist.

3. Längenmeßeinrichtung nach Anspruch 1, bei der der Teilungsträger (TT) mittels einer Zwischenschicht (ZS) mit dem Trägerkörper (TK) verbunden ist.

4. Längenmeßeinrichtung nach Anspruch 3, bei der die Zwischenschicht (ZS) aus einer elastischen Klebeschicht besteht.

5. Längenmeßeinrichtung nach Anspruch 1 und 2, bei der der Trägerkörper (TK) an den Befestigungspunkten (BP11, BP21, BP31, BP12, BP22) mittels Schrauben (S11, S21, S31, S12, S22) unter Zwischenfügung von Kugelscheiben (KS11, KS21, KS31, KS12, KS22) an den Montageflächen (MF1, MF2) des zweiten Objekts (02) befestigt ist.

6. Längenmeßeinrichtung nach Anspruch 5, bei der die konvexen Oberflächen (KO11, KO21, KO31, KO12, KO22) der Kugelscheiben (KS11, KS21, KS31, KS12, KS22) in kegelförmige Ausnehmungen (KA11, KA21, KA31, KA12, KA22) im Bereich der Befestigungsflächen (BF1, BF2) des Trägerkörpers (TK) drehbeweglich eingreifen.

7. Längenmeßeinrichtung nach Anspruch 5, bei der die planen Oberflächen (PO11, PO21, PO31, PO12, PO22) der Kugelscheiben (KS11, KS21, KS31, KS12, KS22) an den Montageflächen (MF1, MF2) des zweiten Objekts (02) anliegen.

8. Längenmeßeinrichtung nach Anspruch 2, bei der die Montageflächen (MF1, MF2) des zweiten Objekts (02) senkrecht zueinander verlaufen.

9. Längenmeßeinrichtung nach Anspruch 1, bei der der Teilungsträger (TT) und/oder der Trägerkörper (TK) einen rechteckigen Querschnitt aufweisen.

10. Längenmeßeinrichtung nach Anspruch 5, bei der zwischen den Köpfen der Schrauben (S11, S21, S31) und dem Trägerkörper (TK) zusätzliche Kugelscheiben (KS11', KS21', KS31') vorgesehen sind.

11. Längenmeßeinrichtung nach Anspruch 10, bei der die Kugelscheiben (KS11', KS21', KS31') mit ihren konvexen Oberflächen in kegelförmige Ausnehmungen (KA11', KA21', KA31') im Bereich der der Befestigungsfläche (BF1) gegenüberliegenden Oberfläche (OF) des Trägerkörpers (TK) eingreifen und mit ihren planen Oberflächen an den Köpfen der Schrauben (S11, S21, S31) anliegen.

**Claims**

1. Length measuring device for measuring the relative position of two objects (01, 02), in which a reading apparatus (AG) for sensing the graduation (T) of a graduation carrier (TT) is fixed to a first object (01), which graduation carrier (TT) is attached to a support body (TK) and the support body (TK) is fixed to a second object (02), wherein the length measuring device comprises the combination of the following features:

a) the graduation surface (TF) of the graduation carrier (TT) with the graduation (T) is arranged perpendicular to a fixing surface (BF1) of the support body (TK),

b) the support body (TK) is fixed to a mounting surface (MF1) of the second object (02) at three fixing points (BP11, BP21, BP31) forming a triangle;

c) the axis of symmetry of the graduation (T) running in the measuring direction runs at the level of the neutral fibre of the graduation carrier (TT);

d) the cross-sections of the graduation carrier (TT) and of the support body (TK) are so arranged that the axis of the smallest areal moment of inertia of the graduation carrier (TT) extends perpendicular to the axis of the smallest areal moment of inertia of the support body (TK).

2. Length measuring device according to claim 1, in which the support body (TK) is fixed to a further mounting surface (MF2) of the second object (02) at two further fixing points (BP12, BP22), in addition to the fixing to the three fixing points (BP11, BP21, BP31) on the mounting surface (MF1).

3. Length measuring device according to claim 1, in which the graduation carrier (TT) is connected to the support body (TK) by means of an intermediate layer (ZS).

4. Length measuring device according to claim 3, in which the intermediate layer (ZS) consists of an elastic adhesive layer.

5. Length measuring device according to claims 2 and 3, in which the support body (TK) Is fixed at the fixing points (BP11, BP21, BP31, BP12, BP22) on the mounting surfaces (MF1, MF2) of the second object (02) by means of screws (S11, S21, S31, S12, S22) with the interposition of domed washers (KS11, KS21, KS31, KS12, KS22).

6. Length measuring device according to claim 5, in which the convex surfaces (KO11, KO21, KO31, KO12, KO22) of the domed washers (KS11, KS21, KS31, KS12, KS22) engage with freedom to rotate in spherically shaped recesses (KA11, KA21, KA31, KA12, KA22) in the region of the fixing surfaces (BF1, BF2) of the support body (TK).

7. Length measuring device according to claim 5, in which the flat surfaces (PO11, PO21, PO31, PO12, PO22) of the domed washers (KS11, KS21, KS31, KS12, KS22) bear on the mounting surfaces (MF1, MF2) of the second object (02).

8. Length measuring device according to claim 2, in which the mounting surfaces (MF1, MF2) of the second object (02) run perpendicular to each other.

9. Length measuring device according to claim 1, in which the graduation carrier (TT) and/or the support body (TK) have a rectangular cross-section.

10. Length measuring device according to claim 5, in which additional domed washers (KS11', KS21', KS31') are provided between the heads of the screws (S11, S21, S31) and the support body (TK).

11. Length measuring device according to claim 10, in which the domed washers (KS11', KS21', KS31') engage with their convex surfaces in spherically shaped recesses (KA11', KA21', KA31') in the region of the surface (OF) of the support body (TK) opposite the fixing surface (BF1) and bear with their flat surfaces on the heads of the screws (S11, S21, S31).

**Revendications**

1. Dispositif de mesure de longueurs, pour mesurer la position relative de deux objets (01, 02), dans lequel un appareil de lecture (AG) pour lire la graduation (T) d'un support de graduation (TT) est fixé à un premier objet (01), le support de graduation (TT) est assemblé à un corps-support (TK) et ce corps-support (TK) est assemblé à un deuxième objet (02), le dispositif de mesure de longueurs présentant la combinaison de caractéristiques suivantes :

a) la surface graduée (TF) présentant la graduation (T) du support de graduation (TT) est disposée perpendiculairement à une surface de fixation (BF1) du corps-support (TK),

b) le corps-support (TK) avec la surface de fixation (BF1) est fixé, en trois points de fixation formant un triangle (BP11, BP21, BP31), à une surface de montage (MF1) du deuxième objet (02);

c) l'axe de symétrie de la graduation (T), s'étendant dans la direction de mesure, passe au niveau de la fibre neutre du support de graduation (TT);

d) les sections droites du support de graduation (TT) et du corps-support (TK) sont agencées de manière que l'axe du plus petit moment d'inertie de surface du support de graduation (TT) soit perpendiculaire à l'axe du plus petit moment d'inertie de surface du corps-support (TK).

2. Dispositif de mesure de longueurs selon revendication 1, dans lequel le corps-support (TK), en plus des trois points de fixation (BP11, BP21, BP31) par lesquels il est fixé à la surface de montage (MF1), est fixé, par une autre surface de fixation (BF2), en deux autres points de fixation (BP12, BP22), à une autre surface de montage (MF2) du deuxième objet (02).

3. Dispositif de mesure de longueurs selon revendication 1, dans lequel le support de graduation (TT) est lié au corps-support (TK) au moyen d'une couche intermédiaire (ZS).

4. Dispositif de mesure de longueurs selon revendication 3, dans lequel la couche intermédiaire (ZS) est constituée par une couche adhésive élastique.

5. Dispositif de mesure de longueurs selon revendications 1 et 2, dans lequel, aux endroits des points de fixation (BP11, BP21, BP31, BP12, BP22), le corps-support (TK) est fixé aux surfaces de montage (MF1, MF2) du deuxième objet (02) au moyen de vis (S11, S21, S31, S12, S22) avec interposition de rondelles à surface sphérique (KS11, KS21, KS31, KS12, KS22).

6. Dispositif de mesure de longueurs selon revendication 5, dans lequel les surfaces convexes (KO11, KO21, KO31, KO12, KO22) des rondelles à surface sphérique (KS11, KS21, KS31, KS12, KS22) s'engagent, avec possibilité de rotation, dans des évidements coniques (KA11, KA21, KA31, KA12, KA22) dans la région des surfaces de fixation (BF1, BF2) du corps-support (TK).

7. Dispositif de mesure de longueurs selon revendication 5, dans lequel les surfaces planes (PO11, PO21, PO31, PO12, PO22) des rondelles à surface sphérique (KS11, KS21, KS31, KS12, KS22) s'appliquent contre les surfaces de montage (MF1, MF2) du deuxième objet (02).

8. Dispositif de mesure de longueurs selon revendication 2, dans lequel les surfaces de montage (MF1, MF2) du deuxième objet (02) s'étendent perpendiculairement l'une à l'autre,

9. Dispositif de mesure de longueurs selon revendication 1, dans lequel le support de graduation (TT) et/ou le corps-support (TK) présentent une section droite rectangulaire.

10. Dispositif de mesure de longueurs selon revendication 5, dans lequel des rondelles à surface sphérique supplémentaires (KS11', KS21', KS31') sont prévues entre les têtes des vis (S11, S21, S31) et le corps-support (TK).

11. Dispositif de mesure de longueurs selon revendication 10, dans lequel les rondelles à surface sphérique (KS11', KS21', KS31') s'engagent, par leurs surfaces convexes, dans des évidements coniques (KA11', KA21', KA31') dans la région de la surface (OF) du corps-support (TK) située en vis-à-vis de la surface de fixation (BF1) et, par leurs surfaces planes, s'appliquent contre les têtes des vis (S11, S21, S31).

FIG. 1

FIG. 3

FIG. 2

FIG. 4

01
TF
AG
TT
STK
ZS
KS31'
BF1
T OF
KA 31'
TK
MF1
02
KA31
KS31
P031  K031  S 31

FIG. 5

KA 11
BP 11
S 11
MF1
OF
02
02
TT
ZS
BP 21
S21
KA21
TK
BP 31
S 31
KA31

**FIG.6**

**FIG.7**